Europäisches Patentamt

**European Patent Office**

**Office européen des brevets**

(11) Publication number:

**0 384 525**
**A1**

# EUROPEAN PATENT APPLICATION

(21) Application number: **90200371.4**

(22) Date of filing: **19.02.90**

(51) Int. Cl.⁵: **G11B 23/03, G11B 33/04**

(30) Priority: **23.02.89 NL 8900447**

(43) Date of publication of application:
**29.08.90 Bulletin 90/35**

(84) Designated Contracting States:
**DE FR GB IT**

(71) Applicant: **N.V. Philips' Gloeilampenfabrieken**
**Groenewoudseweg 1**
**NL-5621 BA Eindhoven(NL)**

(72) Inventor: **Dons, Franciscus Alphonsus**
**c/o INT. OCTROOIBUREAU B.V., Prof.**
**Holstlaan 6**
**NL-5656 AA Eindhoven(NL)**

(74) Representative: **Schrijnemaekers, Hubert**
**Joannes Maria et al**
**Internationaal Octrooibureau B.V. Prof.**
**Holstlaan 6**
**NL-5656 AA Eindhoven(NL)**

(54) **Holder for an inscribable and/or readable disc.**

(57) The invention relates to a holder for receiving an information disc, in particular a CD-single. The holder comprises a holder body (1) comprising a supporting surface (3) and a plurality of, for example three, retaining elements (13, 14, 15) at the periphery of the supporting surface. At least one of the retaining elements (13) is arranged on a sliding member (17) which is slidable in the holder body (1) and which cooperates with a resilient element (29). The other retaining elements (14, 15) are fixed projections on the holder body (1).

FIG.1

EP 0 384 525 A1

## Holder for an inscribable and/or readable disc

The invention relates to a holder for receiving a disc-shaped inscribable and/or readable information disc, comprising a holder body, bounded by an upper surface and a lower surface between which a supporting surface for supporting a disc extends, which holder body further comprises retaining elements arranged at the periphery of the supporting surface to retain the disc, at least one of the retaining elements being a retaining element which is movable relative to the supporting surface against the action of a resilient element secured to the holder.

Such a holder is known from European Patent Application 0,188,663 (PHD 85.475; herewith incorporated by reference). The known holder comprises a recessed supporting surface and three facing retaining elements in the form of projections arranged around the supporting surface. The holder further comprises a gripping portion for holding and carrying the holder. The resilient element in the form of a leaf spring extends parallel to the gripping portion and is coupled to a resilient member in whose centre one of the projections is arranged. Thus, this projection is movable relative to the supporting surface. The two other projections are fixed projections secured to the holder body. The prior-art holder is commercially available and is used in combination with the well-known Compact Disc (CD or CDV), which has a diameter of 12 cm.

The holder can be used as a container for said Compact Disc and is also employed as an easy to handle means for moving the Compact Disc into and out of an optical Compact Disc player, in which case the player obviously comprises a suitably adapted loading mechanism, for example as de-. scribed in Netherlands Patent Application no. 8,702,604 (PHN 12.305; herewith incorporated by refer ence). Such a loading mechanism comprises a part which cooperates with the resilient element of the holder to unlatch the Compact Disc present in the player.

A smaller version (CD-single) of the Compact Disc has now been available for some time, which has a diameter of only 8 cm and which can be played without an adaptation of the playing means of the known players. However, the prior-art commercially available holder cannot accommodate and retain the CD-single because the size of the supporting surface is dictated by the 12-cm CD and the location of and the distance between the retaining elements are also dictated by the 12-cm CD. A solution for this problem could be found by suitably adapting or reducing the dimensions of the prior-art holder. However, this has the disadvantage that the resulting holders cannot cooperate with the players adapted for use with the holder known from said European Patent Application 2,188,663.

It is an object of the invention to modify the holder defined in the opening paragraph in such a way that it can hold an optical disc of a diameter which differs from the customary 12-cm CD, for example 8 cm, without interfering with its use in conjunction with players comprising a loading mechanism adapted to the prior-art commercially available holder.

To this end the holder in accordance with the invention is characterized in that the movable retaining element is arranged on a sliding member which is slidable in the holder body and cooperates with the resilient element which is secured in the holder. The steps in accordance with the invention enable the holder to be dimensioned in such a way that it readily fits existing storage cassettes and can cooperate with existing players without any adaptation of loading mechanisms.

A preferred embodiment of the holder in accordance with the invention, in which the holder has a gripping portion at one side in the proximity of which the resilient element and the movable retaining element are situated, is characterized in that the sliding member is situated in a part of the holder body which adjoins the gripping portion and is movable away from and towards the gripping portion. This holder in accordance with the invention can have the same external dimensions as the commercially available holder known from said European Patent Application 0,188,663 and, moreover, the location of the resilient element can correspond to that of said prior-art holder. For the adaptation to the diameter of the disc to be held it suffices to select suitable dimensions for the supporting surface and the sliding member and to arrange the retaining elements at suitable locations. Despite the fact that the holder can accommodate an optical disc of small diameter, in particular 8 cm, it can have the same outer dimensions and the same position of the resilient element as the current holders of the type defined above, so that the holder in accordance with the invention can be employed in players comprising loading mechanisms constructed to receive said prior-art holders.

Another preferred embodiment of the holder in accordance with the invention, in which the supporting surface is formed with a recess bounded by two facing peripheral portions of the holder body and situated near the movable retaining element, is characterized in that, viewed in a sliding direction, the sliding member comprises projections at opposite sides, for cooperation with said peripheral portions. This yields a simple, effective and flat guiding construction.

In order to ensure a that the holder can be used without any problems in all the loading mechanisms suitable for the purpose a further preferential embodiment of the invention is characterized in that the sliding member extends between the upper surface and the lower surface of the holder body. Thus, it is achieved that neither the underside nor the upper side of the holder comprises any undesirable projecting portions.

By means of suitable profiles of the peripheral portions, for example by providing them with ridges, projections of the sliding member, which are constructed for example as protrusions or ridges, can remain within the boundaries defined by the upper surface and the lower surface of the holder without this causing any constructional problems.

In order to obtain a rattle-free construction a further embodiment is characterized in that the sliding member comprises a coupling element for coupling to the resilient element. The sliding member as well as the holder body can be made of a plastics. Moreover, the sliding member may be integrated with the resilient element and made of a metal.

The invention will now be described in more detail, by way of example, with reference to the drawings in which:

Figure 1 is a plan view of the holder in accordance with the invention,

Figure 2 is a front view,

Figure 3 is a rear view,

Figure 4 is a side view,

Figure 5 is a sectional view V-V, and

Figure 6 is a sectional view VI-VI of the holder shown in Figure 1.

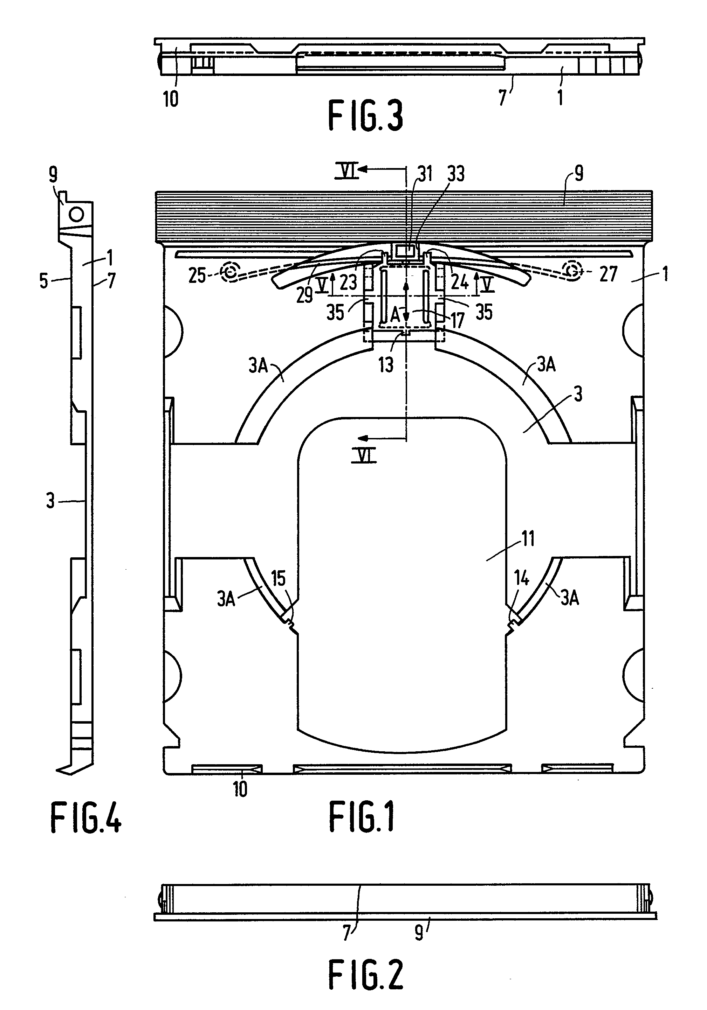

The holder in accordance with the invention shown in Figure 1 comprises a holder body 1 having a supporting surface 3 for supporting a CD-single, not shown, of 8 cm diameter. The holder body is substantially rectangular and, viewed in the direction of its thickness, it is bounded by an upper surface 5 and a lower surface 7. The supporting surface 3 is situated between the upper surface 5 and the lower surface 7 and has slightly inclined arcuate supporting ridges 3a. At its front the holder shown herein has a gripping portion 9 by which the holder can be held.In a central area and in an area nearer the slightly higher rear side 10 the holder has an opening 11 to allow an optical disc to be scanned from the underside of the holder when the disc together with the holder has been loaded into a suitable scanning unit.

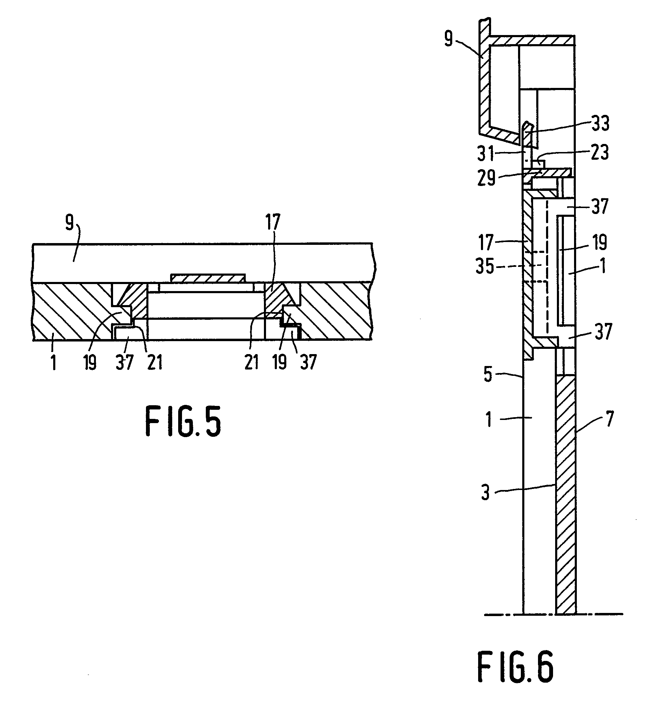

The present holder comprises three retaining elements in the form of projections 13, 14 and 15 to retain said CD-single on the supporting surface. The projections 14 and 15, which are arranged at opposite sides of the opening 11, are integral with the plastics holder body 1 and are consequently fixed projections. However, the projection 13 opposite the projections 14 and 15 is movable relative to the holder body 1. To achieve this, the projection 13 forms part of a plastics sliding member 17, which is rectilinearly movable in the directions indicated by the arrow A towards and away from the gripping portion 9. As is illustrated in Figure 5, the holder body 1 comprises ridges 19 at opposite sides of the sliding member, which ridges extend in the sliding directions of the sliding member and engage in suitable longitudinal grooves 21 in the sliding member 17. At its side which is remote from the projection 13 the sliding member 17 has two hooks 23 and 24 to attach the sliding member 17 to a leaf spring 29 which extends parallel to the gripping portion 9 and is secured to two projections 25 and 27 of the holder body 1. The leaf spring 29 has a bent portion 33 having an opening 31 for cooperation with an actuating element of a suitable CD-player. At its upper side the sliding member 17 has two laterally protruding projections 35 and at its underside it has 4 laterally oriented projections 37. The dimensioning is such that the sliding member 17 is situated between the upper surface 5 and the lower surface 7 of the holder body and does not have an portions projecting from these surfaces.

When a CD-single is placed onto the supporting surface the sliding member 17 with its projection 13 should be moved by hand towards the gripping portion 9 over a small distance. Once the CD-single lies on the supporting surface the sliding member may be released and moves to its initial position under the influence of the leaf spring 29, the optical disc thus being held in place by the three projections 13, 14 and 15. When the holder containing a CD-single is loaded into a suitable player an actuating element of the player will cooperate with the leaf-spring portion 33 as the optical disc is transferred to the turntable of this player, in order to move the sliding member so far towards the gripping portion 9 that the CD-single is released from the holder body 1 and can be brought into a scanning position. The holder described herein is readily suitable for cooperation with the loading mechanism of the player described in the said Netherlands Patent Application no. 8,702,604.

## Claims

1. A holder for receiving a disc-shaped inscribable and/or readable information disc, comprising a holder body, bounded by an upper surface and a lower surface between which a supporting surface for supporting a disc extends, which holder body further comprises retaining elements arranged at the periphery of the supporting surface to retain the disc, at least one of the retaining elements being a retaining element which is movable relative to the supporting surface against the action of a resilient element secured to the holder, characterized in that the movable retaining element is arranged on a sliding member which is slidable in the holder body and cooperates with the resilient element which is secured in the holder.

2. A holder as claimed in Claim 1, in which the holder has a gripping portion at one side in the proximity of which the resilient element and the movable retaining element are situated, characterized in that the sliding member is situated in a part of the holder body which adjoins the gripping portion and is movable away from and towards the gripping portion.

3. A holder as claimed in Claim 1 or 2, in which the supporting surface is formed with a recess bounded by two facing peripheral portions of the holder body and situated near the movable retaining element, characterized in that, viewed in a sliding direction, the sliding member comprises projections at opposite sides, for cooperation with said peripheral portions.

4. A holder as claimed in Claim 1, 2 or 3, characterized in that the sliding member extends between the upper surface and the lower surface of the holder body.

5. A holder as claimed in Claim 3, characterized in that the peripheral portions have longitudinal profiles.

6. A holder as claimed in Claim 1, 2, 3, 4 or 5, characterized in that the sliding member comprises a coupling element for coupling to the resilient element.

7. A holder as claimed in any one of the preceding Claims, characterized in that the sliding member is integral with the resilient element.

EP 0 384 525 A1

FIG.3

FIG.4

FIG.1

FIG.2

1-II-PHN 12844

**FIG.5**

**FIG.6**

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| Y | EP-A-0 265 896 (EASTMAN KODAK) * column 5, line 55 - column 7, line 14; claim 1; figures * | 1-6 | G 11 B 23/03 G 11 B 33/04 |
| Y | EP-A-0 302 549 (PHILIPS) * column 5, line 10 - column 6, line 30; claim 1; figures * | 1-6 | |
| A | EP-A-0 129 292 (PHILIPS) * page 10, line 34 - page 12, line 15; claim 1; figure 7 * | 1, 4-6 | |
| A | EP-A-0 252 226 (IBM) * column 5, lines 27 - 54; figure 1 * | 1, 7 | |
| D,A | EP-A-0 188 663 (POLYGRAM) * claims 1-23; figures * | 1, 2, 5 ,7 | |
| A | PATENT ABSTRACTS OF JAPAN vol. 12, no. 216 (P-719)(3063) 21 June 1988, & JP-A-63 13182 (MATSUSHITA) 20 January 1988, * the whole document * | 1, 2, 5 ,7 | TECHNICAL FIELDS SEARCHED (Int. Cl.5) G 11 B |
| A | US-A-4 433 410 (BOHDAN W. SIRYJ) * column 3, lines 31 - 68; figures * | 1, 4, 6 | |
| P,A | PATENT ABSTRACTS OF JAPAN vol. 13, no. 209 (P-871)(3557) 17 May 1989, & JP-A-12 5377 (NEC CORP.) 27 January 1989, * the whole document * | 1 | |

The present search report has been drawn up for all claims

| Place of search | Date of completion of the search | Examiner |
|---|---|---|
| THE HAGUE | 25-04-1990 | SCHWANDER P.H. |

EPO FORM 1503 03.82 (P0401)